# EUROPEAN PATENT SPECIFICATION

(11) **EP 1 070 611 B1**
(45) Date of publication and mention of the grant of the patent: **14.06.2006**
(21) Application number: 99913602.1
(22) Date of filing: 09.04.1999
(51) Int. Cl.: B60H 1/00

(54) **AIR CONDITIONING UNIT OF CAR AIR CONDITIONING SYSTEM**
KLIMATISIERUNGSEINHEIT EINER FAHRZEUGKLIMAANLAGE
APPAREIL DE CONDITIONNEMENT D'AIR POUVANT EQUIPER LE SYSTEME DE CONDITIONNEMENT D'AIR D'UNE VOITURE

(30) Priority: 10.04.1998 JP 11623998
(43) Date of publication of application: 24.01.2001
(73) Proprietor: Zexel Valeo Climate Control Corporation, Osato-gun, Saitama 360-0193 (JP)
(72) Inventor: SAKAKIHARA, Kimihito, Deceased (JP); IIJIMA, Kenji, Zexel Corp., Kounan-works, Oosato-gun, Saitama-ken 360-0193 (JP); YOSHIYAMA, Takahiro, Zexel Corp., Kounan-works, Oosato-gun, Saitama-ken 360-0193 (JP)
(74) Representative: Britter, Keith Palmer
(86) International application number: PCT/JP1999/001894
(87) International publication number: WO 1999/052726

(56) References cited:
- DE-B- 2 504 475
- DE-C- 19 510 637
- JP-A- 6 270 654
- JP-U- 63 151 309
- PATENT ABSTRACTS OF JAPAN vol. 0186, no. 82 (M-1729), 22 December 1994 (1994-12-22) & JP 6 270654 A (NISSAN MOTOR CO LTD), 27 September 1994 (1994-09-27)
- PATENT ABSTRACTS OF JAPAN vol. 0092, no. 49 (M-419), 5 October 1985 (1985-10-05) & JP 60 099713 A (HITACHI SEISAKUSHO KK), 3 June 1985 (1985-06-03)

## Description

### Technical Field

This invention relates to an air conditioning unit for an air conditioning system for use in an automotive vehicle.

### Background Art

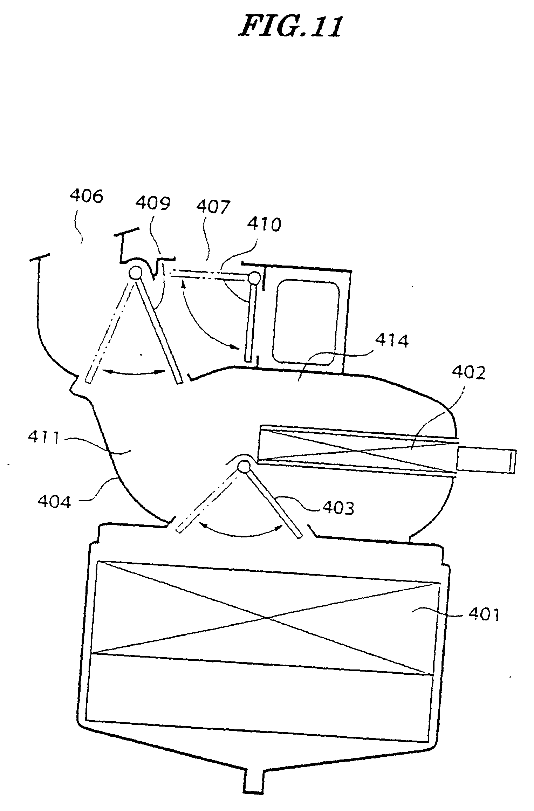

FIG. 11 shows a conventional air conditioning unit for an air conditioning system for automotive vehicles.

The air conditioning unit has an air conditioning unit casing 404 in which are arranged an evaporator 401, an air-mixing door 403, and a heater core 402 from upstream side to downstream side in the mentioned order.

The air conditioning unit casing 404 is formed with an air inlet port, not shown, via which air sent from a blower unit, not shown, is introduced into the unit casing 404, air outlet ports 406, 407 via which air in the unit casing 404 is blown out into a compartment of the vehicle, a cool air passage 411 via which air sent through the evaporator 401 is guided directly to the air outlet ports 406, 407, and a warm air passage 414 via which air sent through the heater core 402 is guided into the cool air passage 411 to merge with the flow of air in the cool air passage 411.

The evaporator 401 is a heat exchanger arranged in the air conditioning unit casing 404 at a location downstream of the air inlet port, for cooling the air sent from the blower unit.

The air-mixing door 403 is a door for controlling the ratio between the air passing through the evaporator 401 and the air passing through the heater core 402.

The heater core 402 is a heat exchanger for heating the air sent from the evaporator 401.

When the air-mixing door 403 is in a position indicated by solid lines in FIG. 11, the air which has passed through the evaporator 401 flows directly toward the air outlet ports 406, 407 via the cool air passage 411 without passing through the heater core 402. As a result, when a defroster door 409 and a vent door 410 are in respective positions indicated by solid lines in FIG. 11, the cool air is blown out via the air outlet port 406.

On the other hand, when the air-mixing door 403 is in a position indicated by two-dot chain lines in FIG. 11, the cool air passage 411 is closed, and hence the air which has passed through the evaporator 402 is sent into the heater core 402. The air which has passed through the heater core 402 is sent into the downstream portion of the cool air passage 411 via the warm air passage 414 and then flows toward the outlet port 406. Thus, when the air passes through the heater core 402, it is heated by the heater core 402 and the resulting warm air is blown out via the outlet port 406.

However, since the air-mixing door 403 is pivotally moved between the maximum heating position (the position indicated by the two-dot chain lines in FIG. 11) and the maximum cooling position (the position indicated by the solid lines in FIG. 11), it is required to provide sufficient space between the evaporator 402 and the heater core 401, for allowing the pivotal motion of the air-mixing door 403, which causes an increase in size of the air conditioning unit in the direction along a vertical dimension of the vehicle.

Further, when the air-mixing door 403 is in a position shifted from a mid point between the maximum heating position and the maximum cooling position toward the maximum heating position or the maximum cooling position, air flows smoothly on one side of the air-mixing door 403, whereas on the other side of the same (i.e. on a side where the area of the air passage is smaller), airflow is made turbulent, which makes it difficult to adjust temperature and obtain sufficient airflow.

JP-A-6270654 discloses in figure 13 thereof an air conditioning unit for an air conditioning system for use in an automotive vehicle, including a single foldable door. The foldable door is arranged within the air conditioning unit casing on an upstream side of a heating heat exchanger for controlling air passing through the heating heat exchanger. The heating heat exchanger is provided for heating air which has passed through a cooling heat exchanger located upstream thereof within the air conditioning unit casing. The foldable door is provided to enable the amount of air flowing through the heating heat exchanger and a cool air passage to be adjusted by adjusting the folding amount of the foldable door. The foldable door is rotatably mounted at first and second separate locations whereby rotation of the foldable door about the first location from being fully unfolded to fully folded progressively increases the amount of air flowing through the heating heat exchanger and rotation of the foldable door about the second location, once the foldable door has been fully folded through rotation about the first location, adjusts the amount of air flowing through the cooling air passage.

DE-C-19510637 discloses a foldable door for closing a ventilation opening in an automotive vehicle air conditioning unit. The door comprises a number of slats arranged side by side with neighbouring slats hinged to one another. One of the slats is pivotal about its longitudinal axis such that rotation of this slat causes the other slats to move within a frame from an unfolded position closing the ventilation opening to a folded position opening the ventilation opening.

### Disclosure of Invention

It is an object of the invention to provide an air conditioning unit which enables reduction of the size of an air conditioning unit casing thereof and makes it possible to adjust temperature properly and obtain sufficient airflow.

To attain the above object, the invention provides an air conditioning unit for an air conditioning system for use in an automotive vehicle, including: a cooling heat exchanger; a heating heat exchanger for heating air which has passed through the cooling heat exchanger; an air conditioning unit casing for accommodating the cooling heat exchanger and the heating heat exchanger; a cool air passage defined within the air conditioning unit casing, for sending the air which has passed through the cooling heat exchanger directly to an air outlet port of the air conditioning unit casing; and an air-mixing door arranged within the air conditioning unit casing for controlling air passing through the heating heat exchanger, said air-mixing door being foldable in two, wherein one end of the air-mixing door is rotatably mounted at a predetermined location close to a cool air passage-side end of the heating heat exchanger, and another end of the air-mixing door is slidably engaged with a guide groove formed at a location upstream of the heating heat exchanger in parallel with a front surface of the heating heat exchanger, the guide groove having one end closest to the cool air passage and another end closest to an inner wall of the air conditioning unit casing, and wherein, when the another end of the air-mixing door is positioned at the one end of the guide groove in a maximum heating mode of the air conditioning unit, the air-mixing door is fully folded to open an upstream side of the heating heat exchanger, and, when the another end of the air-mixing door is positioned at the another end of the guide groove in a maximum cooling mode of the air conditioning unit, the air-mixing door is fully unfolded to close the upstream side of the heating heat exchanger; the air-mixing door comprising a foldable door arranged within the air conditioning unit casing for controlling a ratio between air passing through the cool air passage and air passing through the heating heat exchanger whereby, when the air-mixing door is fully unfolded to close the upstream side of the heating heat exchanger, it opens the cool air passage.

The air conditioning unit of the present invention is characterised over JP-A-6270654 in that said one end of the air mixing door is formed to be L-shaped and is rotatably mounted at a location on a downstream side of the guide groove whereby, as the air-mixing door is rotated to become fully folded to open the upstream side of the heating heat exchanger, it closes the cool air passage.

The air-mixing door can be folded in two as described above. Therefore, it is possible to control the open area upstream of the heating heat exchanger by bending or unbending the air-mixing door, which enables reduction of space required for operation of the air-mixing door (especially, a distance between the heating heat exchanger and the cooling heat exchanger).

Further, in a temperature control mode for mixing cool air and warm air, the airflow from the cooling heat exchanger is split in two by the bent air-mixing door, part of the air being guided to the cool air passage and the rest of the air to the heating heat exchanger, which prevents the airflow from being made turbulent.

With normal or reverse rotation of the one end of the air-mixing door, the another end of the same slides along the guide groove, whereby the air-mixing door is bent or unbent to adjust the area of an opening of the heating heat exchanger.

In one preferred embodiment, the air-mixing door comprises a pair of door members, and a hinge for connecting the door members to each other.

More preferably, the air-mixing door includes a cover for covering the hinge when the air-mixing door is fully unfolded.

According to this preferred embodiment, the cover covers the hinge in the maximum cooling mode, thereby preventing leakage of cold air toward the heating heat exchanger.

It is also preferred that at least one of a cool air passage-side one of the pair of door members and the air conditioning unit casing is formed with a cool air guide.

According to this preferred embodiment, an improved mixed state of the cool air and the warm air can be obtained in the maximum cooling mode, whereby, for instance, it is possible to adjust the difference in temperature between air blown out from the vent outlet port and air blown out from the foot outlet port, as required.

In another preferred embodiment, the air-mixing door is formed by a single flexible plate.

According to this preferred embodiment, it is possible to form the air-mixing door by a smaller number of component parts.

Preferably, the single flexible plate has one groove formed in a substantially mid portion thereof.

The above and other objects, features and advantages of the present invention will become more apparent from the following description taken in conjunction with the accompanying drawings.

### Brief Description OF Drawings

FIG. 1 is a view showing the internal construction of an air conditioning unit for an air conditioning system for use in an automotive vehicle, according to a first embodiment of the invention;
FIG. 2 is a perspective view of an air-mixing door;
FIG. 3 shows the air-mixing door, in which FIG. 3(a) is a view showing the air-mixing door in an unbent state, and FIG. 3(b) is a view showing the air-mixing door in a bent state;
FIG. 4 is a view showing an internal state of the air conditioning unit in a maximum cooling mode;
FIG. 5 is a view showing an internal state of the air conditioning unit in a temperature control mode;
FIG. 6 is a view showing an internal state of the air conditioning unit in a maximum heating mode;
FIG. 7 shows an air-mixing door of an air conditioning unit for an air conditioning system for use in an automotive vehicle, according to a variation of the first embodiment, in which FIG. 7(a) is a view showing the air-mixing door in an unbent state, and FIG. 7(b) is a view showing the air-mixing door in a bent state;
FIG. 8 shows an air-mixing door of an air conditioning unit for an air conditioning system for use in an automotive vehicle, according to another variation of the first embodiment, in which FIG. 8(a) is a view showing the air-mixing door in an unbent state, and FIG. 8(b) is a view showing the air-mixing door in a bent state;
FIG. 9 is a view showing the internal construction of an air conditioning unit for an air conditioning system for use in an automotive vehicle, according to a second embodiment of the invention;
FIG. 10 is a diagram showing the relationship between the temperature of air blown out from a vent outlet port and the temperature of air blown out from a foot outlet port; and
FIG. 11 is a view showing a conventional air conditioning unit for an air conditioning system for use in an automotive vehicle.

### Best Mode of Carrying Out the Invention

The invention will now be described in detail with reference to drawings showing preferred embodiments thereof.

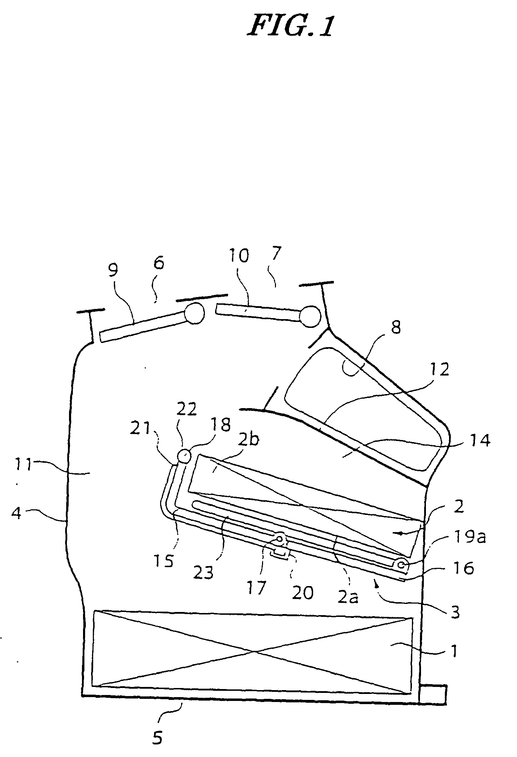

Referring first to FIG. 1, there is shown the internal construction of an air conditioning unit for an air conditioning system for use in an automotive vehicle, according to a first embodiment of the invention.

The air conditioning unit is comprised of an evaporator (cooling heat exchanger) 1 for cooling air sent from an air blower, not shown, a heater core (heating heat exchanger) 2 for heating the air which has passed through the evaporator 1, an air-mixing door 3 for controlling the ratio between the air passing through the evaporator 1 and the air passing through the heater core 2, and an air conditioning unit casing 4 in which the evaporator 1, the heater core 2, and the air-mixing door 3 are accommodated.

The air conditioning unit casing 4 is formed with an air inlet port 5 for introducing air sent from a blower unit, not shown, as well as a defroster outlet port 6, a vent outlet port 7, and a foot outlet duct port 8. The defroster outlet port 6 and the vent outlet port 7 are opened/closed by a defroster door 9 and a vent door 10, respectively. Connected to the foot outlet duct port 8 is a foot outlet duct, not shown.

In the air conditioning unit casing 4, there is defined a cool air passage 11 via which the air having passed through the heater core 2 is guided directly to the defroster outlet port 6, the vent outlet port 7, and the foot outlet duct port 8. Further, defined at a location downstream of the heater core 2 in the air conditioning unit casing 4 is a warm air passage 14 via which the air having passed through the heater core 2 is guided to a downstream portion of the cool air passage 11 to merge with the flow of air in the cool air passage 11.

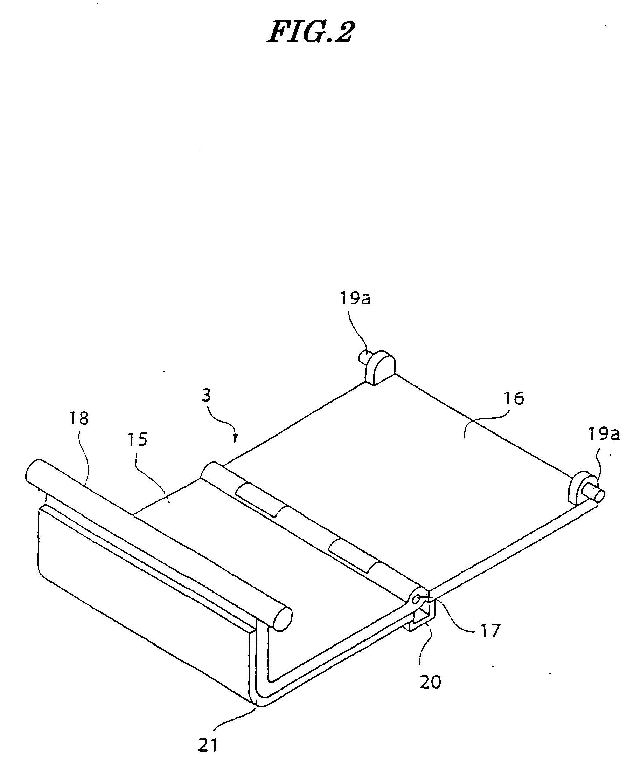

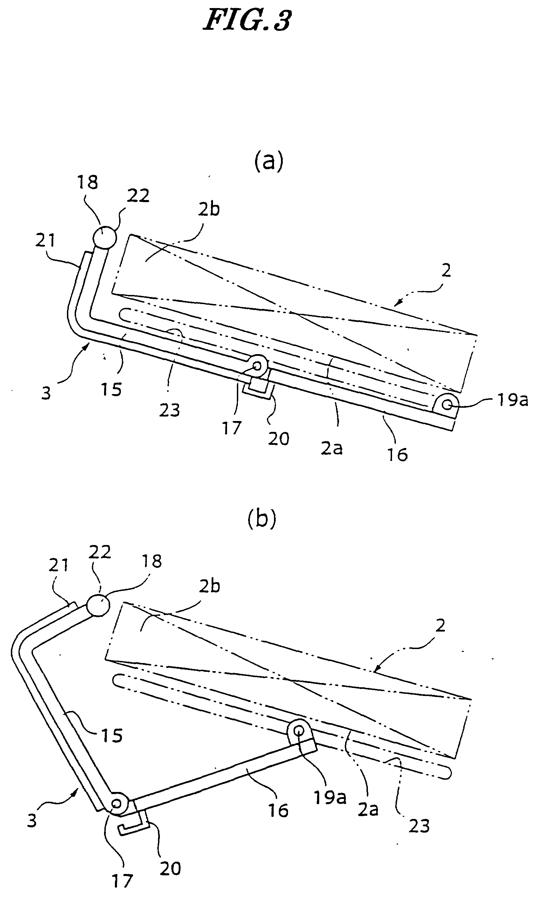

FIG. 2 is a perspective view of the air-mixing door 3. FIG. 3 shows the air-mixing door, in which FIG. 3(a) shows the air-mixing door in an unbent state, while FIG. 3(b) shows the same in a bent state.

The air-mixing door 3 is comprised of an L-shaped door member 15, another door member 16 in the form of a flat plate, and a hinge 17 for connecting the two door members 15, 16 to each other. A shaft 18 is secured to one end of the door member 15, while a pair of pins 19a are secured to one end of the door member 16. The door member 16 has a J-shaped cover 20 attached to a front face thereof, for covering the hinge 17 when the air-mixing door 3 is unbent as shown in FIG. 3(a). Affixed to a front face of the door member 15 is a lining 21 for airtightly closing an inlet port of the cool air passage 11 when the air conditioning unit is in a maximum heating mode.

The air conditioning unit casing 4 is formed with a pair of shaft holes 22 opposed to each other for rotatably receiving opposite ends of the shaft 18 of the air-mixing door 3 and a pair of guide grooves opposed to each other with which the pair of pins 19a of the door member 16 are slidably engaged. The shaft holes 22 are located in the vicinity of a cold air passage-side end 2b of the heater core 2. The guide grooves 23 are at respective opposite locations upstream of the heater core 2 substantially in parallel with a front surface 2a of the heater core 2.

The shaft 18 is driven by an actuator, not shown, arranged on an outer wall surface of the air conditioning unit 4, for normal or reverse rotation according to each of modes set by an air conditioning switch, not shown, and with the rotation of the shaft 18, the pins 19a slide along the respective guide grooves 23. As a result, the air-mixing door 3 changes its shape according to the mode set by the switch.

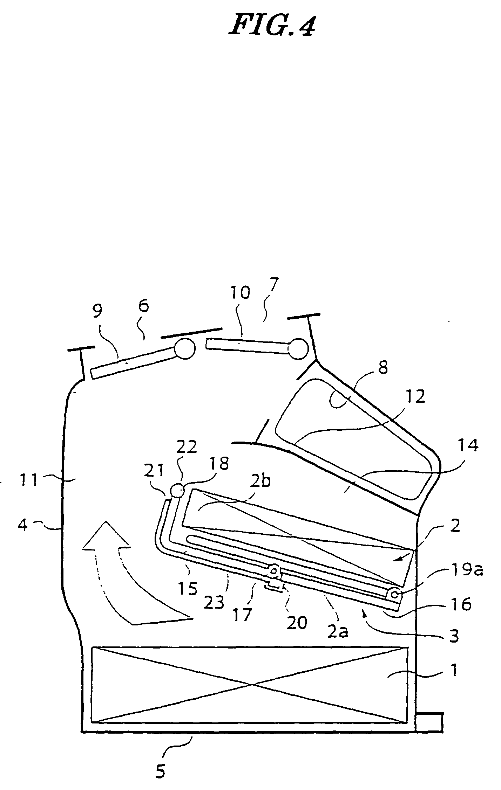

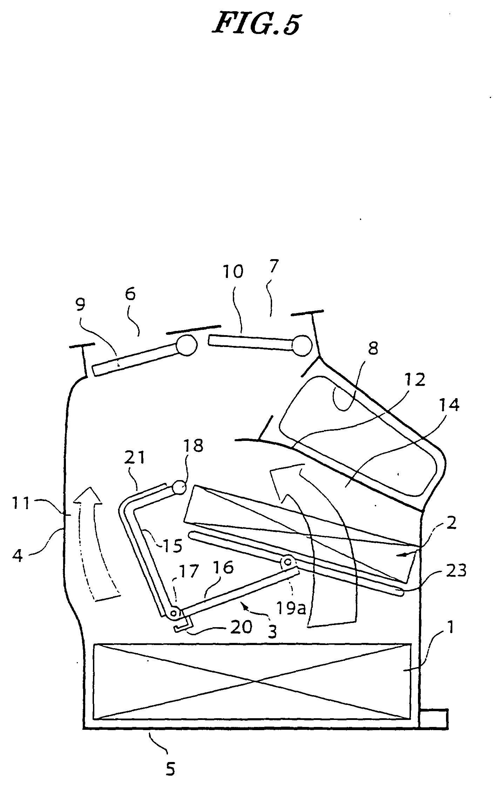

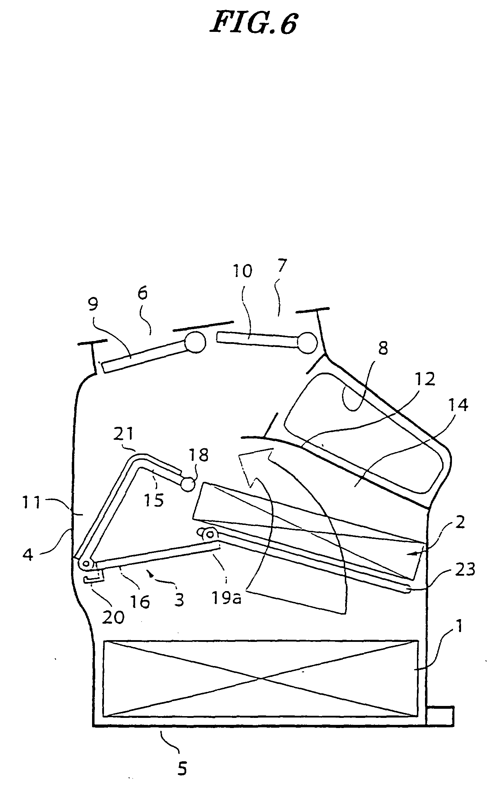

FIG. 4 shows an internal state of the air conditioning unit 4 in a maximum cooling mode, FIG. 5 an internal state of the same in a temperature control mode, and FIG. 6 an internal state in the maximum heating mode.

During the maximum cooling mode set by the air conditioning switch, not shown, the air-mixing door is held in a position shown in FIG. 4.

The air introduced via the air inlet port 5 of the air conditioning unit 4 passes through the evaporator 1 and then flows through the cool air passage 11 toward the defroster outlet port 6, the vent outlet port 7, and the foot outlet duct port 8. The air is cooled while passing through the evaporator 1.

When the defroster and vent doors 9, 10 are in respective positions indicated by solid lines in FIG. 4, the defroster and vent outlet ports 6, 7 are closed, so that the air is blown out into the compartment of the vehicle via the foot outlet duct port 8 and the foot outlet duct, not shown.

When the air conditioning switch is set to the temperature control mode, the actuator drives the shaft 18 for rotation to cause the door member 15 of the air-mixing door 3 to move pivotally about the shaft 18. Since the door members 15 and 16 are connected to each other by the hinge 17, the pivotal movement of the door member 15 causes the pins 19a to slide in the respective guide grooves 23 toward the cool air passage 11. Then, the pins 19a each stop substantially at an intermediate point of the guide groove 23, whereby the air-mixing door is bent in two.

The airflow from the evaporator 1 is split by the bent air-mixing door 3 bent in two. As a result, part of the air is guided by the door member 15 to the cool air passage 11, and the rest of the air is guided by the door member 16 to the heater core 2. The-air which has passed through the cool air passage 11 flows toward the defroster outlet port 6. The air which has flowed from the evaporator 1 to the heater core 2 is heated while passing through the heater core 2, and then guided toward the cool air passage 11 via the warm air passage 14. The warm air guided by the warm air passage 14 is mixed with the cool air passing through the cool air passage 11, and then the mixed air flows toward the defroster outlet port 6.

When the air conditioning switch is set to the maximum heating mode, the actuator drives the shaft 18 for rotation to cause the door member 15 of the air-mixing door 3 to move pivotally about the shaft 18, whereby the pins 19a of the door member 16 slides to the cool air passage-side ends of the respective guide grooves. At this time, the air-mixing door 3 is bent at an acutest angle. As a result, the door member 16 of the air-mixing door 3 is brought into contact with an inner wall surface of the cool air passage 11, whereby the cool air passage 11 is closed. Since an end of the door member 15 having the lining 21 affixed to the front face thereof is held in intimate contact with the inner wall surface of the cool air passage 11, the inlet port of the cool air passage 11 is airtightly closed. Thus, the air which has passed through the evaporator 1 is all sent toward the heater core 2, and after passing through the heater core 2, flows toward the defroster outlet port 6 via the warm air passage 14.

According to the above first embodiment, since the open area upstream of the heater core 2 is adjusted by bending or unbending the air-mixing door 3, it is possible to reduce the space required for operation of the air-mixing door 3 in the direction along the vertical dimension of the vehicle compared with the prior art, which contributes to reduction of the size of the air conditioning unit in the same direction.

Further, when the air conditioning unit is in the temperature control mode for mixing cool air and warm air, since the airflow from the evaporator 1 is split in two by the bent air-mixing door 3, part of the air being guided by the door member 15 into the cool air passage and the rest of the air being guided by the door member 16 into the heater core 2, the air can flow smoothly without being made turbulent, which allows proper temperature control and sufficient supply of airflow.

Still further, when the air conditioning unit is in the maximum cooling mode, since the hinge 17 is covered by the cover 20, it is possible to prevent leakage of cool air toward the heater core 2.

Moreover, since the use of the L-shaped door member 15 makes it possible to arrange the shaft 18 in the cool air passage at a downstream-side location with respect to the guide grooves 23, the space required for operation of the air-mixing door 3 can be reduced in the direction along the vertical dimension of the vehicle in the case of the air conditioning unit being set in an upright position.

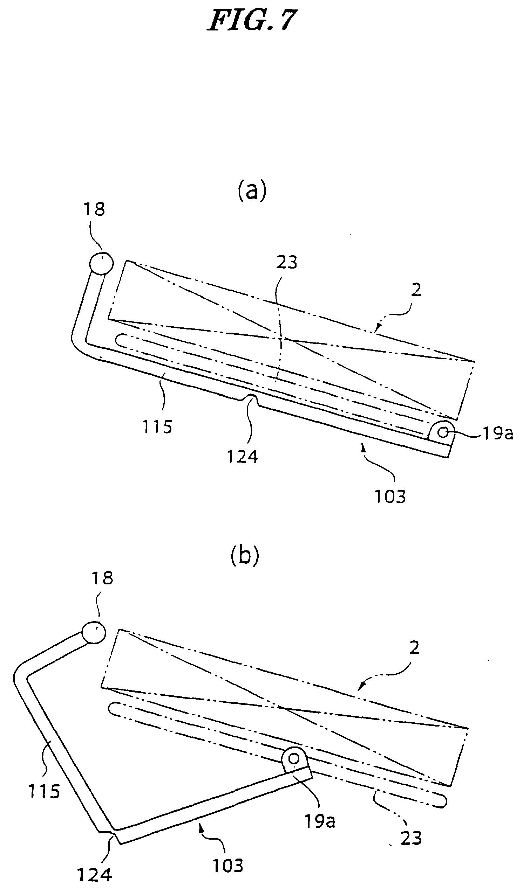

FIG. 7 shows an air-mixing door 103 of an air conditioning unit for an air conditioning system for an automotive vehicle, according to a variation of the first embodiment. FIG. 7(a) shows the air-mixing door 103 in an unbent state, while FIG. 7(b) shows the same in a bent state.

Component parts and elements similar to those of the first embodiment are designated by identical reference numerals, and detailed description thereof is omitted. This variation is distinguished from the first embodiment in that the air-mixing door 103 is formed by a flexible plate 115 having a groove 124 formed in a substantially mid portion thereof as shown in FIG. 7(a) such that the flexible plate 115 (i.e. the air-mixing door 103) can be bent at the groove 124 as shown in FIG. 7(b).

According to this variation, the hinge 17 and the cover 20 can be dispensed with, which contributes to reduction of the member of component parts.

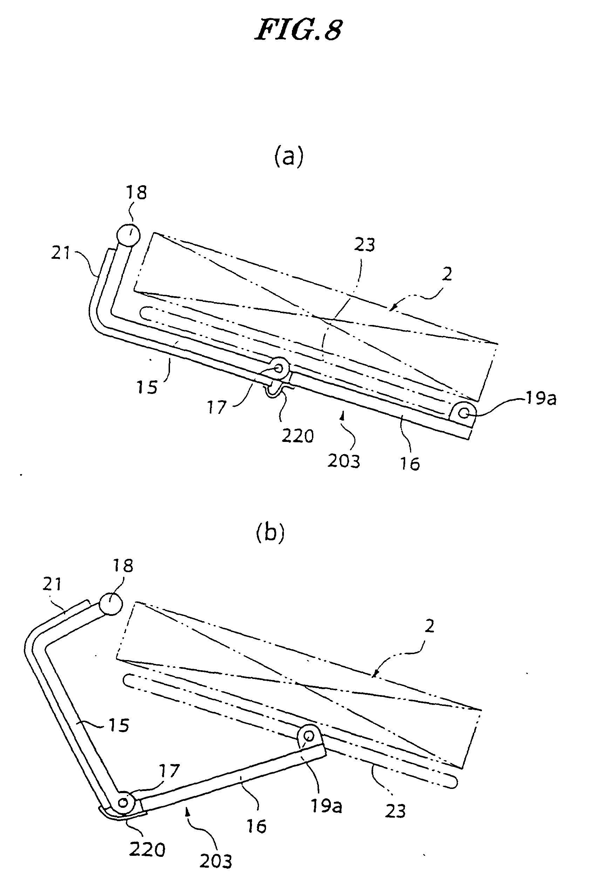

FIG. 8 shows an air-mixing door 203 of an air conditioning unit for an air conditioning system for an automotive vehicle, according to another variation of the first embodiment. FIG. 8(a) shows the air-mixing door 103 in an unbent state, while FIG. 8(b) shows the same in a bent state.

Component parts and elements similar to those of the first embodiment are designated by identical reference numerals, and detailed description thereof is omitted.

This variation is distinguished from the first embodiment in which the J-shaped cover 20 is attached to the front face of the door member 16, for covering the hinge 17 when the air-mixing door 3 is unbent, in that a cover 220 formed of an elastic material bridges between the door members 15 and 16, as shown in FIG. 8(a), for covering the hinge 17 all the time.

When the air-mixing door 3 is unbent as shown in FIG. 8(a), the cover 220 sags, and when the air-mixing door 3 is bent as shown in FIG. 8(b), the cover 220 is expanded.

This variation provides the same effects as obtained by the first embodiment.

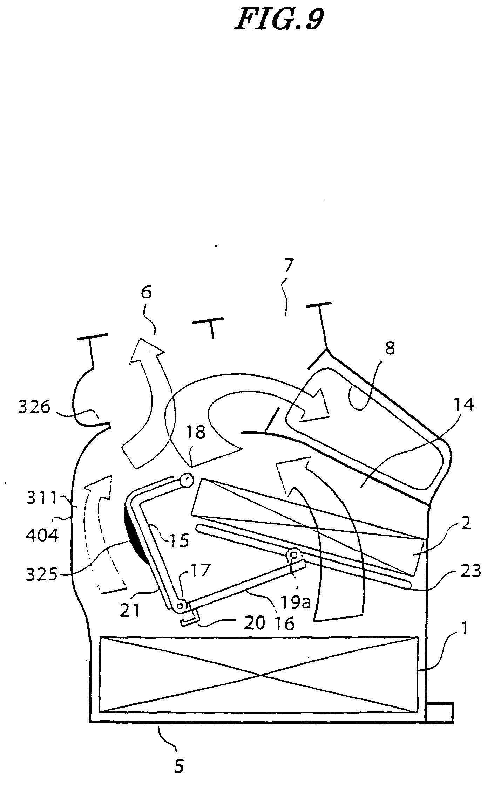

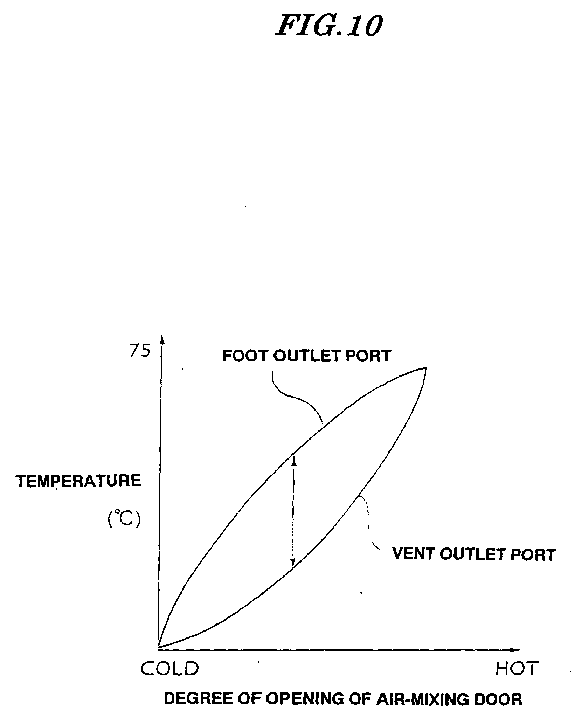

FIG. 9 shows the internal construction of an air conditioning unit for an air conditioning system for use in an automotive vehicle, according to a second embodiment of the invention, while FIG. 10 shows the relationship between the temperature of air blown out from a vent outlet port and that of air blown out from a foot outlet port.

Component parts and elements similar to those of the first embodiments are designated by identical reference numerals, and detailed description thereof is omitted.

In the second embodiment, the door member 15 is formed thereon with a protuberant portion 325 in the form of a mountain having gentle slopes, for guiding cool air sent through an evaporator 1, and a protruding portion 326 is provided at a downstream portion in a cool air passage 311, for guiding the air in the cool air passage 311 such that the air can flow into air which has passed through a warm air passage 314.

According to the second embodiment, an improved mixed state of the cool air and the warm air can be achieved in the temperature control mode of the air conditioning unit, and hence in a bi-level mode of the unit in which the vent outlet port 7 and the foot outlet port (not shown) are both open, it is possible to utilize the protuberant portion and the protruding portion to change the difference in temperature between the air from the vent outlet 7 and the air from the foot outlet port according to the amount of opening of the air-mixing door e.g. as shown in FIG. 10, whereby a perfectly air-conditioned state for "keeping one's head cool and feet warm" can be realized. Further, in this embodiment, the temperature of the air from the outlet ports is increased smoothly in response to switching of the unit to the maximum heating mode.

Moreover, since the protrusion 325 has a shape of a mountain having gentle slopes, there occurs no large resistance against airflow, so that the amount of airflow is not reduced.

Although in the above embodiments, the guide grooves 23 are formed in parallel with the front surface of the heater core 2 and in the vicinity thereof, this is not limitative, but one end portion of each of the guide grooves 23 may be formed to have an arcuate shape such that the distance between the heater core 2 and the air-mixing door is increased, so as to change the amount of air which flows through the heater core 2.

### Industrial Applicability

According to the air conditioning unit of the invention, for an air conditioning system for a vehicle, it is possible to adjust the open area upstream of the heating heat exchanger by bending or unbending the air-mixing door. Accordingly, the space required for operation of the air-mixing door can be reduced, which contributes to reduction of the size of the air conditioning unit. Further, even when the air conditioning unit is in the temperature control mode for mixing cool air and warm air, the airflow is not made turbulent, which enables proper temperature control and sufficient supply of airflow.

## Claims

1. An air conditioning unit for an air conditioning system for use in an automotive vehicle, including:
a cooling heat exchanger (1);
a heating heat exchanger (2) for heating air which has passed through the cooling heat exchanger (1);
an air conditioning unit casing (4) for accommodating the cooling heat exchanger (1) and the heating heat exchanger (2);
a cool air passage (11) defined within the air conditioning unit casing (4), for sending the air which has passed through the cooling heat exchanger (1) directly to an air outlet port (6) of the air conditioning unit casing (4); and
an air-mixing door (3) arranged within the air conditioning unit casing (4) for controlling air passing through the heating heat exchanger (2), said air-mixing door (3) being foldable in two,
wherein one end of the air-mixing door (3) is rotatably mounted at a predetermined location close to a cool air passage-side end (2b) of the heating heat exchanger (2), and another end of the air-mixing door (3) is slidably engaged with a guide groove (23) formed at a location upstream of the heating heat exchanger (2) in parallel with a front surface (2a) of the heating heat exchanger (2), the guide groove (23) having one end closest to the cool air passage (11) and another end closest to an inner wall of the air conditioning unit casing (4),
and wherein, when the another end of the air-mixing door (3) is positioned at the one end of the guide groove (23) in a maximum heating mode of the air conditioning unit, the air-mixing door (3) is fully folded to open an upstream side of the heating heat exchanger (2), and, when the another end of the air-mixing door (3) is positioned at the another end of the guide groove (23) in a maximum cooling mode of the air conditioning unit, the air-mixing door (3) is fully unfolded to close the upstream side of the heating heat exchanger (2),
the air-mixing door (3) comprising a foldable door arranged within the air conditioning unit casing (4) for controlling a ratio between air passing through the cool air passage (11) and air passing through the heating heat exchanger (2) whereby, when the air-mixing door (3) is fully unfolded to close the upstream side of the heating heat exchanger, it opens the cool air passage (11);
the air conditioning unit being **characterised in that** said one end of the air mixing door (3) is formed to be L-shaped and is rotatably mounted at a location on a downstream side of the guide groove (23) whereby, as the air-mixing door (3) is rotated to become fully folded to open the upstream side of the heating heat exchanger (2), it closes the cool air passage (11).

2. An air conditioning unit according to claim 1, wherein the air-mixing door (3) comprises an L-shaped door member (15) and another door member in the form of a flat plate and a hinge (17) for connecting the door members (15, 16) to each other.

3. An air conditioning unit according to claim 2, wherein the air-mixing door (3) includes a cover (20) for covering the hinge (17) when the air-mixing door (3) is fully unfolded.

4. An air conditioning unit according to any of claims 1 to 3, wherein at least one of a cool air passage-side, one of the pair of door members (15, 16) and the air conditioning unit casing (4) is formed with a cool air guide.

5. An air conditioning unit according to claim 1, wherein the air-mixing door comprises a flexible plate (115) capable of being folded in two.

6. An air conditioning unit according to claim 5, wherein the single flexible plate (115) has one groove (124) formed in a substantially midportion thereof.

7. An air conditioning system including an air conditioning unit according to any of claims 1 to 6.

8. An automotive vehicle including an air conditioning unit according to any of claims 1 to 6.

## Patentansprüche

1. Klimatisierungseinheit für eine Klimaanlage zur Verwendung in einem Fahrzeug, welche beinhaltet:
einen Kühl-Wärmetauscher (1);
einen Heiz-Wärmetauscher (2) zum Erwärmen von Luft, die durch einen Kühl-Wärmetauscher (1) geflossen ist;
ein Klimatisierungseinheit-Gehäuse (4) zur Aufnahme des Kühl-Wärmetauschers (1) und des Heiz-Wärmetauschers (2);
einen Kühlluftdurchgang (11), der in dem Klimatisierungseinheit-Gehäuse (4) definiert ist, der die Luft, die durch den Kühl-Wärmetauscher (1) geflossen ist, direkt zu einer Auslassöffnung (6) des Klimatisierungseinheit-Gehäuses (4) schickt; und
eine Luftmischtür (3), die in dem Klimatisierungseinheit-Gehäuse (4) angeordnet ist, um die Luft, die durch den Heiz-Wärmetauscher (2) fließt, zu steuern, wobei die Luftmischtür (3) in zwei Teile gefaltet werden kann,
wobei ein Ende der Luftmischtür (3) an einer vorbestimmten Stelle nahe eines Endes (2b) der Kühlluftdurchgangsseite des Heiz-Wärmetauschers (2) drehbar befestigt ist und ein anderes Ende der Luftmischtür (3) in gleitendem Eingriff mit einer Führungsnut (23) ist, die an einer Stelle stromaufwärts des Heiz-Wärmetauschers (2) parallel zu einer Vorderfläche (2a) des Heiz-Wärmetauschers (2) gebildet ist, wobei ein Ende der Führungsnut (23) dem Kühlluftdurchgang (11) am nächsten ist und ein weiteres Ende der Innenwand des Klimatisierungseinheit-Gehäuses (4) am nächsten ist,
und wobei, wenn das andere Ende der Luftmischtür (3) an einem Ende der Führungsnut (23) in einem maximalen Heizmodus der Klimatisierungseinheit angeordnet ist, die Luftmischtür (3) vollständig gefaltet ist, so dass sie eine stromaufwärts gelegene Seite des Heiz-Wärmetauschers (2) öffnet, und
wenn das andere Ende der Luftmischtür (3) an dem anderen Ende der Führungsnut (23) in einem maximalen Kühlmodus der Klimatisierungseinheit angeordnet ist, ist die Luftmischtür (3) vollständig entfaltet, so dass sie die stromaufwärts gelegene Seite des Heiz-Wärmetauschers (2) schließt,
wobei die Luftmischtür (3) eine Falttür aufweist, die in dem Klimatisierungseinheit-Gehäuse (4) angeordnet ist zum Kontrollieren eines Verhältnisses zwischen der Luft, die durch den Kühlluftdurchgang (11) fließt und der Luft, die durch den Heiz-Wärmetauscher (2) fließt, wodurch, wenn die Luftmischtür (3) vollständig entfaltet ist, so dass sie die stromaufwärts gelegene Seite des Heiz-Wärmetauschers schließt, sie den Kühlluftdurchgang (11) öffnet;
wobei die Klimatisierungseinheit **dadurch gekennzeichnet ist, dass** das eine Ende der Luftmischtür (3) L-förmig ist und drehbar an einer Stelle an einer Seite stromabwärts der Führungsnut (23) befestigt ist, wodurch, wenn sich die Luftmischtür (3) dreht, so dass sie vollständig gefaltet wird, um die stromaufwärts gelegene Seite des Heiz-Wärmetauschers (2) zu öffnen, sie den Kühlluftdurchgang (11) schließt.

2. Klimatisierungseinheit nach Anspruch 1, wobei die Luftmischtür (3) ein L-förmiges Türelement (15) und ein weiteres Türelement in der Form einer flachen Platte und ein Scharnier (17) zum Verbinden der Türelemente (15, 16) miteinander aufweist.

3. Klimatisierungseinheit nach Anspruch 2, wobei die Luftmischtür (3) eine Abdeckung (20) beinhaltet, um das Scharnier (17) abzudecken, wenn die Luftmischtür (3) vollständig entfaltet ist.

4. Klimatisierungseinheit nach einem der Ansprüche 1 bis 3, wobei mindestens der Kühlluftdurchgang und/oder ein Paar der Türelemente (15, 16) und/oder das Klimatisierungseinheit-Gehäuse (4) mit einem Kühlluftführung gebildet sind.

5. Klimatisierungseinheit nach Anspruch 1, wobei die Luftmischtür eine flexible Platte (115) aufweist, die in zwei Teile gefaltet werden kann.

6. Klimatisierungseinheit nach Anspruch 5, wobei die einzelne flexible Platte (115) eine Nut (124) aufweist, die in einem im Wesentlichen mittleren Abschnitt derselben gebildet ist.

7. Klimaanlage einschließlich einer Klimatisierungseinheit nach einem der Ansprüche 1 bis 6.

8. Fahrzeug mit einer Klimatisierungseinheit nach einem der Ansprüche 1 bis 6.

## Revendications

1. Unité de conditionnement d'air pour un système de climatisation utilisable dans un véhicule automobile, comprenant :
un échangeur de chaleur refroidisseur (1) ;
un échangeur de chaleur réchauffeur (2) pour réchauffer l'air ayant circulé dans le refroidisseur (1) ;
un boîtier (4) de l'unité de conditionnement d'air pour loger le refroidisseur (1) et le réchauffeur (2) ;
un passage d'air froid (11) défini à l'intérieur du boîtier de l'unité de conditionnement d'air (4) pour diriger l'air ayant circulé dans le refroidisseur directement vers une ouïe de sortie d'air (6) du boîtier de l'unité de conditionnement d'air (4) ; et un volet mélangeur d'air (3) positionné à l'intérieur du boîtier (4) pour régler l'air circulant dans le réchauffeur (2), ledit volet mélangeur étant repliable en deux
et dans lequel une extrémité du volet mélangeur (3) pivotant est montée en un point déterminé proche du passage d'air frais (2b) du réchauffeur (2) et l'autre extrémité du volet mélangeur (3) est engagée pour glisser dans unc rainure de guidage (23) située en amont du réchauffeur (2) et parallèle avec la face avant (2a) du réchauffeur (2), une extrémité de la rainure étant proche du passage d'air froid (11) et l'autre extrémité étant proche de la paroi interne du boîtier de l'unité de conditionnement d'air (4)
et dans lequel, quand l'autre extrémité du volet mélangeur d'air (3) est positionnée à une extrémité de la rainure (23) en mode chauffage maximum de l'unité de conditionnement d'air, le volet mélangeur (3) est entièrement replié pour ouvrir le côté amont du réchauffeur (2) ct, quand l'autre extrémité du volet mélangeur d'air (3) est positionnée à l'autre bout de la rainure (23), en mode refroidissement maximum de l'unité de conditionnement d'air, le volet mélangeur d'air est entièrement déplié afin d'obturer le côté amont du réchauffeur (2)
le volet mélangeur d'air (3) comprenant un volet repliable monté à l'intérieur du boîtier de l'unité de conditionnement d'air (4) pour contrôler le rapport entre le volume d'air circulant dans le passage d'air froid (11) et le volume d'air circulant dans le réchauffeur (2), et au moyen duquel, lorsque ce volet mélangeur est entièrement déplié pour obturer le côté amont du réchauffeur, il ouvre le passage d'air froid (11)
l'unité de conditionnement d'air étant **caractérisée par le fait que** la dite extrémité du volet mélangeur d'air (3) a une forme en « L » et pivote à un point du côté aval de la rainure de guidage (23) et au moyen de laquelle lorsque le volet mélangeur (3) pivote pour se replier complètement et ouvrir le côté amont du réchauffeur (2), il ferme le passage d'air froid (11).

2. Unité de conditionnement d'air selon la revendication 1, dans laquelle le volet mélangeur d'air (3) comprend un premier élément de volet en forme de « L » (15), un second élément de volet ayant la forme d'une plaque plate et une charnière (17) pour relier entre eux les éléments 15 et 16 du volet mélangeur d'air.

3. Unité de conditionnement d'air selon la revendication 2, dans laquelle le volet mélangeur d'air est muni d'un cache (20) pour couvrir la charnière (17) lorsque le volet mélangeur(3) est entièrement déplié.

4. Unité de conditionnement d'air selon n'importe laquelle des revendications 1 à 3, dans laquelle au moins un des deux éléments (15, 16) du volet mélangeur d'air du côté du passage d'air froid et le boîtier de l'unité de conditionnement d'air (4) comprend un guide d'air froid.

5. Unité de conditionnement d'air selon la revendication 1, dans laquelle le volet mélangeur d'air comprend une plaque souple (115) pouvant être repliée en deux.

6. Unité de conditionnement d'air selon la revendication 5, dans laquelle la plaque souple (115) porte une rainure (124) dans sa partie médiane.

7. Système de climatisation comprenant une unité de conditionnement d'air selon n'importe laquelle des revendications 1 à 6.

8. Véhicule automobile équipé d'une unité de conditionnement d'air selon n'importe laquelle des revendications 1 à 6.
